# EUROPÄISCHE PATENTSCHRIFT

(11) **EP 0 968 639 B1**
(45) Veröffentlichungstag und Bekanntmachung des Hinweises auf die Patenterteilung: **05.03.2003**
(21) Anmeldenummer: 99112148.4
(22) Anmeldetag: 24.06.1999
(51) Int. Cl.: A01C 15/00

(54) **Zentrifugaldüngerstreuer**
Centrifugal fertiliser spreader
Epandeur centrifuge pour engrais

(30) Priorität: 29.06.1998 DE 19828713; 26.02.1999 DE 19908700
(43) Veröffentlichungstag der Anmeldung: 05.01.2000
(73) Patentinhaber: Amazonen-Werke H. Dreyer GmbH & Co. KG, 49205 Hasbergen (DE)
(72) Erfinder: Dreyer, Heinz, Dr.Dipl.-Ing., 49205 Hasbergen (DE)

(56) Entgegenhaltungen:
- EP-A- 0 702 889
- EP-A- 0 840 997

## Beschreibung

Die Erfindung betrifft einen Zentrifugaldüngerstreuer gemäß des Oberbegriffes des Patentanspruches 1.

Ein derartiger Zentrifugaldüngerstreuer ist beispielsweise durch die DE-OS 44 33 475 bekannt geworden. Dieser Düngerstreuer weist auf der der Grenze benachbarten Seite einen Grenzstreuschirm auf, mittels welchem ein zur Grenze hin steil abfallendendes Streubild erzielbar ist. Zum Normalstreuen wird dieser Grenzstreuschirm in Außerbetriebstellung gebracht.

Durch die EP 00 17 128 ist ein weiterer Zentrifugaldüngerstreuer bekannt, bei dem durch Einstellung der Wurfschaufeln ebenfalls ein zur Grenze hin steil abfallendes Grenzstreubild erzielbar ist. Bei diesen Zentrifugaldüngerstreuer ist beim Grenzstreuen vorgesehen, daß die der Grenze benachbarten Schleuderscheibe eine geringere Düngemittelmenge als der der Grenze abgewandten Schleuderscheibe zugeführt wird.

Der Erfindung liegt die Aufgabe zugrunde, einen Schleuderdüngerstreuer zu schaffen, der mit einfachen Mitteln auf das Grenzstreuen einstellbar ist.

Diese Aufgabe wird erfindungsgemäß jeweils durch die kennzeichnenden Merkmale der Patentanspruches 1 gelöst. Infolge dieser jeweiligen Maßnahme wird beim Bringen des Grenzstreuschirms in die Grenzstreuposition automatisch eine Einstellung der Dosierorgane vorgenommen, durch welche der Schleuderscheibe, die dem Grenzstreuschirm zugeordnet ist, eine geringe Materialmenge zudosiert. Es werden also zwei Ausbringstellungen für das Dosierorgan, welches dem Grenzstreuschirm zugeordnet ist, vorgesehen.

Weitere Einzelheiten sind den übrigen Ansprüchen, der Beispielsbeschreibung und den Zeichnungen zu entnehmen. Hierbei zeigen
- Fig.1: den Düngerstreuer in der Ansicht von hinten,
- Fig.2: den Einstellmechanismus in der Seitenansicht im vergrößertenMaßstab,
- Fig. 3: einen weiteren Einstellmechanismus zur Einstellung der Grenzstreustellung in der Darstellungsweise gemäß Fig. 2,
- Fig. 4: einen weiteren Einstellmechanismus zur Einstellung der Grenzstreustellung in der Darstellungsweise gemäß Fig. 2,
- Fig. 5: einen weiteren Einstellmechanismus zur Einstellung der Grenzstreustellung in der Darstellungsweise gemäß Fig. 2,
- Fig.6: einen weiteren Düngerstreuer in der Ansicht von hinten und
- Fig.7: den Einstellmechanismus in der Seitenansicht im vergrößertenMaßstab.

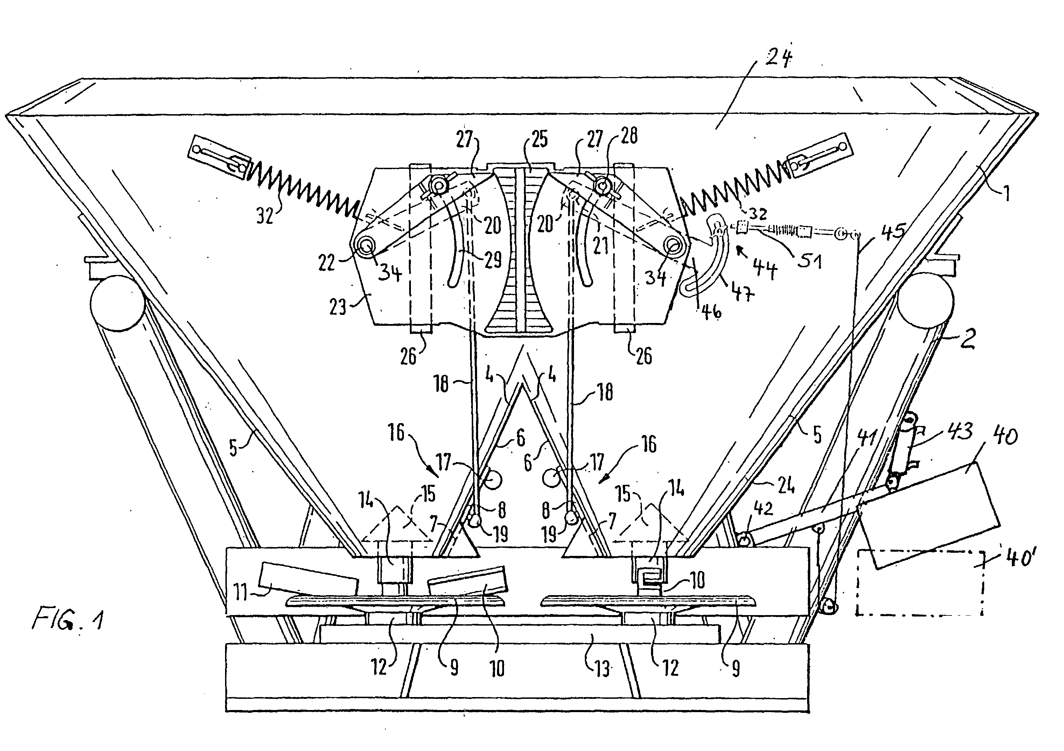

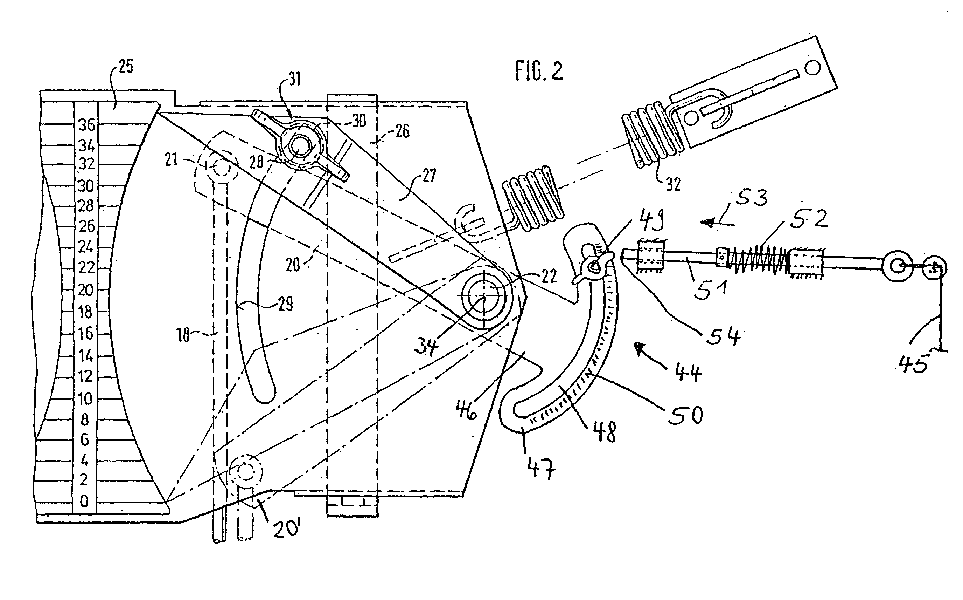

Der Zentrifugaldüngerstreuer gemäß der Fig.1 und 2 weist den Vorratsbehälter 1 und den Rahmen 2 auf. Am Rahmen 2 sind auf der Vorderseite die Dreipunktkupplungselemente angeordnet, über welche der Zentrifugaldüngerstreuer an den Dreipunktkraftheber eines nicht dargestellten Schleppers anzubauen ist. Der Vorratsbehälter 1 ist in seinem unteren Bereich durch das dachförmige Mittelteil 4 in die beiden Auslauftrichter 5 aufgeteilt. Im unteren Bereich der Seitenwände 6 des dachförmigen Mittelteiles 4 sind die Auslauföffnungen 7 angeordnet Vor den Auslauföffnungen 7 ist jeweils ein Schieber 8 angeordnet, mittels welchen die Öffnungsweite der jeweiligen Auslauföffnungen 7 einzustellen und die Auslauföffnungen zu verschließen ist.

Unterhalb der Auslauföffnung 7 sind die Schleuderscheiben 9 mit ihren Wurfelementen 10 und 11 auf den Getriebeausgangswellen 12 des Getriebes 13 welches am Rahmen 2 befestigt ist, angeordnet. Über das Getriebe 13 werden die Schleuderscheiben 9 im entgegengesetzten Drehsinn zueinander rotierend angetrieben, und zwar in der Weise, daß sie im mittleren Bereich vorne aufeinander zulaufen. Auf dem oberen Ende der Getriebeausgangswellen 12 ist oberhalb der Schleuderscheiben 9 eine Rohrhülse 14 drehfest angeordnet. Die Rohrhülse 14 ist mit der Getriebeausgangswelle 12 verbunden. Auf der Rohrhülse 14 ist das sich im unteren Bereich des Vorratsbehälters 1 vor der Auslauföffnung 7 sich befindende Rührorgan 15 angeordnet. Vor den Auslauföffnungen 7 befinden sich die Schieber 8 zur Einstellung der Öffnungsgröße der Auslauföffnung 7. Die Schieber 8 bilden zusammen mit den Auslauföffnungen 7 die Dosierorgane 16.

Den Schiebern 8 sind die als Hydraulikzylinder 17 ausgebildeten Betätigungselemente zugeordnet. Mittels dieser Hydraulikzylinder 17 werden die Schieber 8 in Schließstellung gebracht, so daß die Auflauföffnungen 7 verschlossen sind. Desweiteren sind an den Schiebern 8 die Verbindungselemente 18 mittels als Kugelköpfe 19 ausgebildeten Gelenke angeordnet. Diese Verbindungselemente 18 sind an einem Hebel 20 mittels das als Kugelkopf 21 ausgebildetem Gelenkes angeordnet. Dieser Hebel 20 ist schwenkbar auf dem Bolzen 22 an dem Halteelement 23 angeordnet. Das Halteelement 23 ist an der Rückwand 24 des Vorratsbehälters 1 befestigt. An dem Halteelement 23 ist die Skala 25 angeordnet. Hinter dem Halteelement 23 befindet sich das Gegenhalteelement 26 in einem Abstand zu dem Halteelement 23. Zwischen dem Gegenhaltelement 26 und dem Halteelement 24 wird der Hebel 20 geführt. Auf der Vorderseite des Halteelementes 23 ist auf dem Bolzen 22 der Zeiger 27 schwenkbar gelagert. Der an dem Zeiger 27 angeordnete Bolzen 28 durchsetzt ein in dem Haltelement 23 bogenförmig angeordnetes Langloch 29. Auf der Rückseite des Halteelementes 23 ist auf dem Bolzen 28 ist der Ansatz 30 angeordnet, der den Anschlag 31 für den Hebel 20 bildet. Anhand der Skala 25 läßt sich der Zeiger 27 und somit der Anschlag 31 für den Einstellhebel 20 entsprechend der gewünschten Ausbringmenge einstellen. In der in Fig.1 gezeigten Position befinden sich die Anschläge 31 in der Position für die größtmögliche Ausbringmenge. Die Schieber 8 sind ebenfalls in der größten möglichen Öffnungstellung für die Auflauföffnungen 7 eingezeichnet. In den mit strichpunktierten Linien dargestellten Positionen befinden sich die Hebel 20 in der geschlossen Position für die Schieber 8. An dem Hebel 20 greift jeweils eine Zugfeder 32 an, die an dem Vorratsbehälter 1 befestigt ist. Die Feder 32 ist an dem Einstellhebel 20 derart angeordnet, daß die Verbindungselemente 18 immer auf Zug belastet sind. Somit zieht also die Feder 32 die Schieber 8 in Richtung ihrer Öffnungstellung für die Auslauföffnungen 7. Hierdurch wird erreicht, daß die Schieber 8 immer in die gewünschten Öffnungsposition gebracht werden. Somit wird also evtl. in dem Verbindungsgestänge 18 vorhandenes Spiel ausgeschaltet.

Die Einstellhebel 20 sind um eine in Fahrtrichtung verlaufende Achse 34, die durch die Bolzen 22 verläuft angeordnet, schwenkbar am Streuer befestigt. Die Anschläge 31 mit den Skalen 25 befinden sich im hinteren-oberen, nach oben verlaufenden Bereich des Vorratsbehälters 1. Die Einstellhebel 20 sind möglichst dicht an der hinteren Vorratabehälterwand 24 liegend angeordnet. Desweiteren sind die Einstellhebel 20, Anschläge 31 und Skalen 25 zumindest 40-50 cm oberhalb der Streuorgane 10 angeordnet. Somit befinden sich die Einstellhebel 20, Skalen 25 und Anschläge 31 außerhalb des Bereiches, in dem sich während des Betriebes Düngerstaub ablagert. Die Skalen 25 reichen etwa bis an das obere Ende des trichterförmigen Bereiches des Vorratsbehälters 1. Die Anschläge 31 und Skalen 25 sind in einer aufrechten Ebene am Vorratsbehälter befestigt.

Auf der in Fahrtrichtung gesehen rechten Seite des Düngerstreuers ist an dem Rahmen 2 die als Grenzstreuschirm ausgebildete Grenzstreueinrichtung 40 angeordnet. Eine derartige Grenzstreueinrichtung 40 ist beispielsweise in der DE-OS 44 33 475 beschrieben. Diese Grenzstreueinrichtung 40 ist mittels der Halterung 41 in aufrechter Ebene schwenkbar mittels des Gelenkes 42 am Rahmen 2 angeordnet. Desweiteren ist zwischen dem Rahmen 2 und der Grenzstreueinrichtung 40, die als Hydraulikzylinder 43 ausgebildete Betätigungseinrichtung angeordnet, mittels der der Grenzstreuschirm 40 aus der mit durchzogenen Linien eingezeichneten Außerbetriebstellung in die mit strichpunktierten Linien eingezeichnete Betriebsstellung 40' bringbar ist.

Der Einstelleinrichtung 27 bis 31 der Dosierorgane 16 ist eine zusätzliche Einstelleinrichtung 44 zur Ausbringmengeneinstellung für das Dosierorgan 16 welches das Material, der dem Grenzstreuschirm zugeordneten Schleuderscheibe zudosiert, vorgesehen. Mittels dieser Einstelleinrichtung 41 ist zusätzlich zu den eingangs beschriebenen Anschlag- und Einstellelementen 27 bis 31 die Einstellung einer zweiten Ausbringeinstellung möglich. Zwischen dem Grenzstreuschirm 40 bzw. dem Betätigungselement 43 des Grenzstreuschirmes 40 und der zusätzlichen Einstelleinrichtung 44 ist das als Seil ausgebildete mechanische Übertragungselement 45 angeordnet. Dieses Übertragungselement 45 kann auch hydraulisch oder pneumatisch ausgebildet sein.

An den Hebel 20 ist das über dem Bolzen 22 hinausragende Verlängerungsstück 46 mit dem kurvenförmigen Element 47, vorzugsweise anschraubbar und/oder ansteckbar angeordnet. Dieses Element 47 weist das bogenförmige Landloch auf, in welchem der einstellbare Anschlag 49 zur Festlegung der für das Grenzstreuen vorgesehen Ausbringmenge angeordnet ist. Dieses Anschlagelement 49 wird so eingestellt, daß sich eine gleichmäßige Düngerverteilung in etwa gleicher Größenordnung wie im übrigen Feld ergibt. Auf dem kurvenförmigen Element 47 ist im Bereich des Langloches 48 die Skala 50 zur Einstellung des Anschlagelementes 47 angeordnet.

An dem Rahmen 2 bzw. dem Vorratsbehälter 1 ist der als Anschlag ausgebildete verschiebbare Anschlagbolzen 51, der Teil der Einstellvorrichtung 44 ist, angeordnet. Der Anschlagbolzen 51 wird mittels der Feder 52 in Pfeilrichtung 53 gedrückt, wenn durch das an ihm befestigte Übertragungselement 45, eine Einschaltung der Einstelleinrichtung 44 durch das Absenken des Grenzstreuschirmes 40 zum Grenzstreuen erfolgt.

Die Funktionsweise der Maschine beim Grenzstreuen ist folgende:

Zu Beginn einer Streubahn sind die Dosierorgane 16 geschlossen, so daß sich der Hebel 20 in der Position 20' befindet. Zu Beginn der Streubahn, die an der Grenze liegt, wird mittels des Betätigungselementes 43 der Grenzstreuschirm 40 aus der Außerbetriebstellung in die Betriebsstellung 40' gebracht. Hierdurch wird der Grenzstreuschirm 40 abgesenkt und über das Übertragungselement 45 wird der Anschlagbolzen 51 durch die Feder 52in Pfeilrichtung 53 gedrückt werden, so daß das vordere Ende 54 des Anschlagelementes 51 sich in dem Bewegungsbereich des einstellbaren Anschlagelementes 49 befindet. Wenn nun zu Beginn der Grenzstreubahn die Dosierelemente 16 geöffnet werden, d. h., daß die Federn 32 die jeweiligen Hebel 20 in die in Fig. 2 gezeigte obere Position zu ziehen versuchen, so verhindert das Anschlagelement 49 in Verbindung mit dem Anschlagbolzen 51, daß der Hebel 20 der Grenze zugeordnet ist, ganz nach oben gegen das Anschlagelement 31 gezogen werden kann. Somit ist eine reduzierte Ausbringmenge für das Dosierorgan, welches der Schleuderscheibe, die dem Grenzstreuschirm 40 und der Grenze benachbart ist, eingestellt.

Wenn das Grenzstreuen beendet ist, wird über das Betätigungsmittel 43 der Grenzstreuschirm 40 in die Außerbetriebsstellung verschwenkt und gleichzeitig wird über das mechanische Übertragungsmittel 45 der Anschlagbolzen 51 in die in den Fig. 1 und 2 eingezeichnete Position gezogen, so daß der Hebel 20 in die in Fig. 2 eingezeichnete Position mittels der Feder 32 gegen-das Anschlagelement 31 gezogen wird.

Somit wird also automatisch beim Schwenken des Grenzstreuschirm 40 seine Betriebsposition 40' eine reduzierte Menge für die Grenzstreuseite eingestellt.

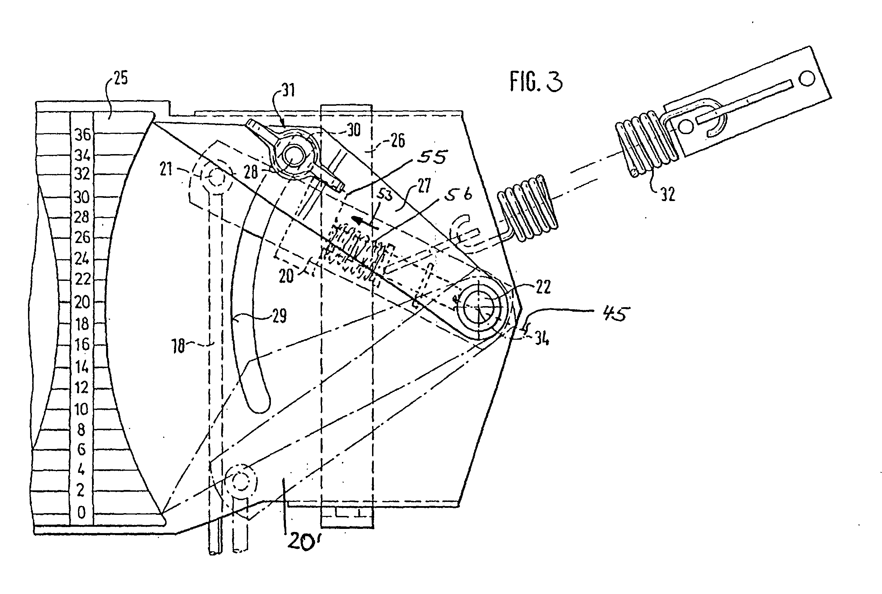

Die Fig. 3 zeigt eine weitere Ausbildung es Elementes 55 für eine reduzierte Ausbringmenge beim Grenzsteuen. Auf dem Hebel 20 ist verschiebbare Reduzieranschlagelement 55 angeordnet. Dieses Element 55 ist in Außerbetriebsstellung dargestellt und wird mittels des als Seil ausgebildeten mechanischen Übertragungselementes 45, welches in ähnlicher Weise wie in Fig. 1 dargestellt ist, mit dem Grenzstreuschirm 40 verbunden ist. Wenn der Grenzstreuschirm 40 in Betriebsposition 40' gebracht wird, so wird das Anschlagmittel 55mittels der Feder 56 in Pfeilrichtung 53 in den Bereich des Langloches 29 geschoben. Dieses geschieht, wenn der Hebel 20 sich in der unteren Position 20' befindet, d. h., wenn die Dosierorgane 16 geschlossen sind. Wenn das Anschlagmittel 55 sich beim Grenzstreuen in Bereich des Langloches 29 befindet, so kommt die dem Anschlag 31 genachbarte Seite 20" des Hebels 20 an dem Anschlag 55 zur Anlage, so daß der Hebel 20 nicht gegen den Anschlag 31 gezogen wird, sondern mittels des Anschlagelementes 55 im Abstand zu dem Anschlag 31 gehalten wird, so daß eine reduzierte Ausbringmenge eingestellt ist.

Anstelle der Anordnung des Anschlagelementes an dem Hebel 20 kann auf dem Anschlagbolzen 28 ein nicht dargestelltes Exenterelement angeordnet sein, mittels welchem die Position des Hebels 20 zu dem Bolzen 28 eingestellbar ist. An diesem Exenterelement ist dann ein Hebel angeordnet, mit dem das Exenterelement um die durch die Mitte des Bolzens 28 verlaufende Schwenkachse verdrehbar ist. Dieser Hebel ist dann mit dem Übertragungselement 45, welches mit dem Grenzstreuschirm 40 verbunden ist, verbunden. Somit wird über das nicht dargestellte Exzenterelement eine reduzierte Materialmenge beim Grenzstreuen automatisch eingestellt.

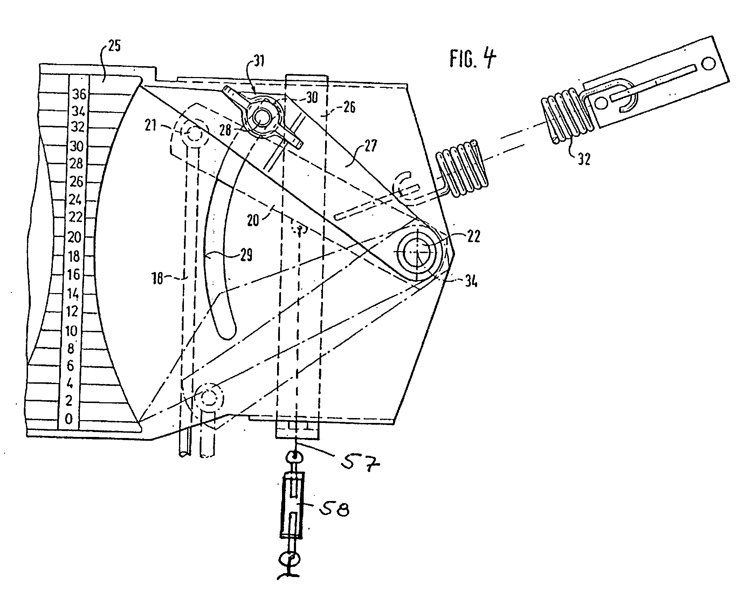

Beim dem Ausführungsbeispiel gemäß Fig. 4 ist zwischen dem Hebel 20 und dem Grenzstreuschirm 40 die Koppeleinrichtung 57 angeordnet. Die Länge des Kopplungselementes 57 ist über das als Spannschloß 58 ausgebildete Einstellelement in der Länge einstellbar, so daß die gewünschte reduzierte Ausbringmengenstellung für den Hebel 20 einstellbar ist. Wenn der Grenzstreuschirm 40 in Betriebsstellung mittels des Betätigungselementes 43 geschwenkt wird, wird über die Kopplungseinrichtung 57 der Hebel 20 um einen bestimmten Betrag nach unten gezogen, so daß eine reduzierte Ausbringmenge an dem der Grenze benachbarten Schleuderscheibe zugeordnete Dosierorgan 16 eingestellt wird.

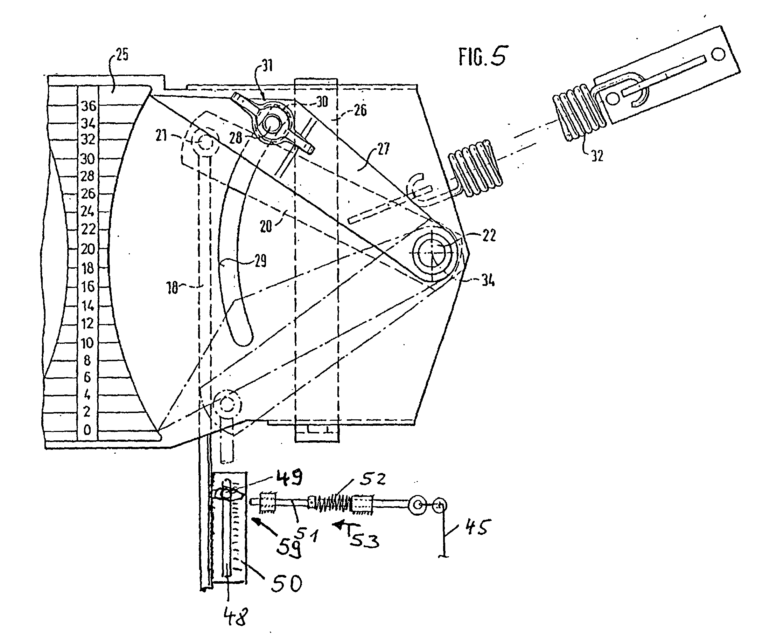

Bei dem Ausführungsbeispiel gemäß Fig. 5 ist das einstellbare Anschlagelement 59 für die Einstellung einer reduzierten Ausbringmengstellung des der der Grenze zugeordneten Schleuderscheiben zugeordneten Dosierorgan 16 an dem Verbindungselement 16 angeordnet. Die Funktionsweise dieses Anschlagelementes 59 entspricht der Funktsweise des Einstellelementes 49 gemäß den Fig. und 2, so daß auf die entsprechende Funktionsbeschreibung zu den Fig. 1 und 2 verwiesen wird.

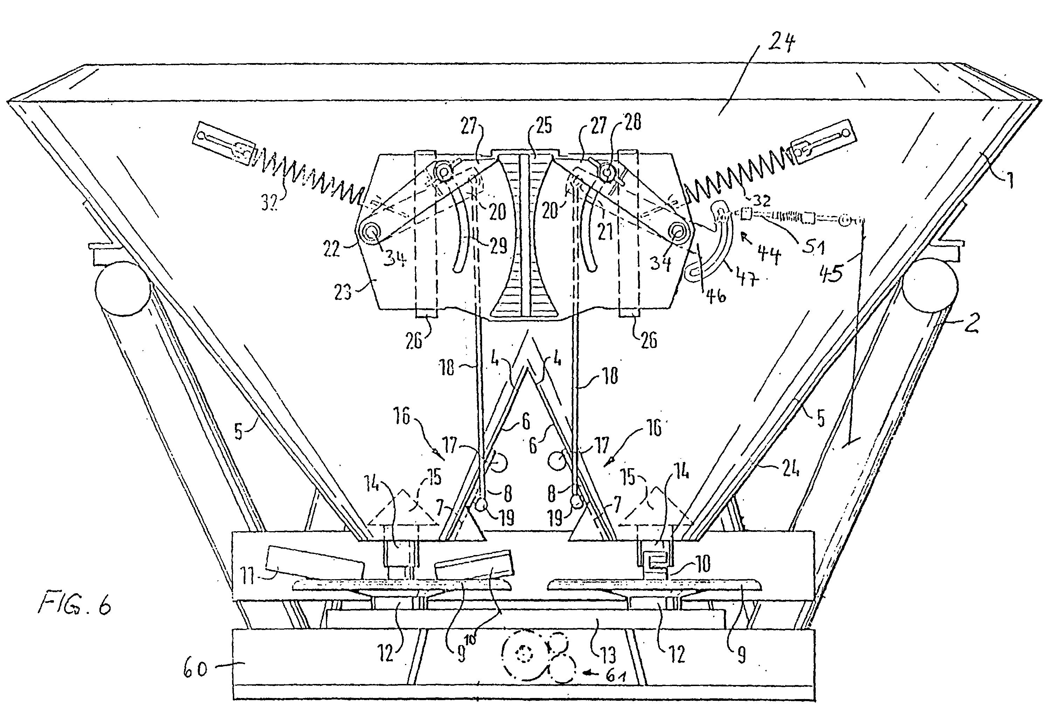

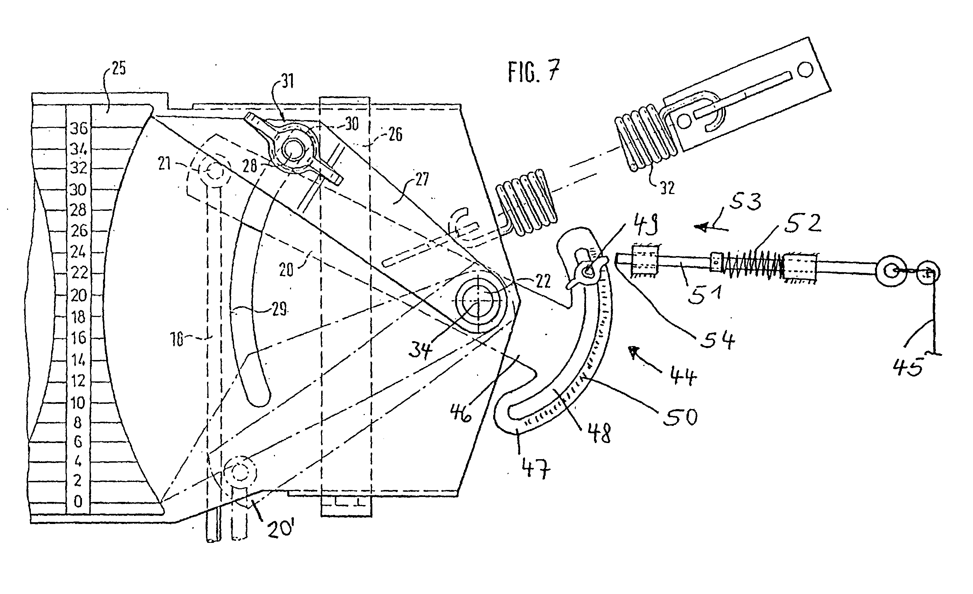

Der Zentrifugaldüngerstreuer gemäß der Fig.6 und 7 weist den Vorratsbehälter 1 und den Rahmen 2 auf. Am Rahmen 2 sind auf der Vorderseite die Dreipunktkupplungselemente angeordnet, über welche der Zentrifugaldüngerstreuer an den Dreipunktkraftheber eines nicht dargestellten Schleppers anzubauen ist. Der Vorratsbehälter 1 ist in seinem unteren Bereich durch das dachförmige Mittelteil 4 in die beiden Auslauftrichter 5 aufgeteilt. Im unteren Bereich der Seitenwände 6 des dachförmigen Mittelteiles 4 sind die Auslauföffnungen 7 angeordnet. Vor den Auslauföffnungen 7 ist jeweils ein Schieber 8 angeordnet, mittels welchen die Öffnungsweite der jeweiligen Auslauföffnungen 7 einzustellen und die Auslauföffnungen zu verschließen ist.

Unterhalb der Auslauföffnung 7 sind die Schleuderscheiben 9 mit ihren Wurfelementen 10 und 11 auf den Getriebeausgangswellen 12 des Getriebes 13, welches am Rahmen 2 befestigt ist, angeordnet. Über das Getriebe 13 werden die Schleuderscheiben 9 im entgegengesetzten Drehsinn zueinander rotierend angetrieben, und zwar in der Weise, daß sie im mittleren Bereich vorne aufeinander zulaufen. Auf dem oberen Ende der Getriebeausgangswellen 12 ist oberhalb der Schleuderscheiben 9 eine Rohrhülse 14 drehfest angeordnet. Die Rohrhülse 14 ist mit der Getriebeausgangswelle 12 verbunden. Auf der Rohrhülse 14 ist das sich im unteren Bereich des Vorratsbehälters 1 vor der Auslauföffnung 7 sich befindende Rührorgan 15 angeordnet. Vor den Auslauföffnungen 7 befinden sich die Schieber 8 zur Einstellung der Öffnungsgröße der Auslauföffnung 7. Die Schieber 8 bilden zusammen mit den Auslauföffnungen 7 die Dosierorgane 16.

Den Schiebern 8 sind die als Hydraulikzylinder 17 ausgebildeten Betätigungselemente zugeordnet. Mittels dieser Hydraulikzylinder 17 werden die Schieber 8 in Schließstellung gebracht, so daß die Auflauföffnungen 7 verschlossen sind. Desweiteren sind an den Schiebern 8 die Verbindungselemente 18 mittels als Kugelköpfe 19 ausgebildeten Gelenke angeordnet. Diese Verbindungselemente 18 sind an einem Hebel 20 mittels das als Kugelkopf 21 ausgebildetem Gelenkes angeordnet. Dieser Hebel 20 ist schwenkbar auf dem Bolzen 22 an dem Halteelement 23 angeordnet. Das Halteelement 23 ist an der Rückwand 24 des Vorratsbehälters 1 befestigt. An dem Halteelement 23 ist die Skala 25 angeordnet. Hinter dem Halteelement 23 befindet sich das Gegenhalteelement 26 in einem Abstand zu dem Halteelement 23. Zwischen dem Gegenhaltelement 26 und dem Halteelement 24 wird der Hebel 20 geführt. Auf der Vorderseite des Halteelementes 23 ist auf dem Bolzen 22 der Zeiger 27 schwenkbar gelagert. Der an dem Zeiger 27 angeordnete Bolzen 28 durchsetzt ein in dem Haltelement 23 bogenförmig angeordnetes Langloch 29. Auf der Rückseite des Halteelementes 23 ist auf dem Bolzen 28 ist der Ansatz 30 angeordnet, der den Anschlag 31 für den Hebel 20 bildet. Anhand der Skala 25 läßt sich der Zeiger 27 und somit der Anschlag 31 für den Einstellhebel 20 entsprechend der gewünschten Ausbringmenge einstellen. In der in Fig.1 gezeigten Position befinden sich die Anschläge 31 in der Position für die größtmögliche Ausbringmenge. Die Schieber 8 sind ebenfalls in der größten möglichen Öffnungstellung für die Auflauföffnungen 7 eingezeichnet. In den mit strichpunktierten Linien dargestellten Positionen befinden sich die Hebel 20 in der geschlossen Position für die Schieber 8. An dem Hebel 20 greift jeweils eine Zugfeder 32 an, die an dem Vorratsbehälter 1 befestigt ist. Die Feder 32 ist an dem Einstellhebel 20 derart angeordnet, daß die Verbindungselemente 18 immer auf Zug belastet sind. Somit zieht also die Feder 32 die Schieber 8 in Richtung ihrer Öffnungstellung für die Auslauföffnungen 7. Hierdurch wird erreicht, daß die Schieber 8 immer in die gewünschten Öffnungsposition gebracht werden. Somit wird also evtl. in dem Verbindungsgestänge 18 vorhandenes Spiel ausgeschaltet.

Die Einstellhebel 20 sind um eine in Fahrtrichtung verlaufende Achse 34, die durch die Bolzen 22 verläuft angeordnet, schwenkbar am Streuer befestigt. Die Anschläge 31 mit den Skalen 25 befinden sich im hinteren-oberen, nach oben verlaufenden Bereich des Vorratsbehälters 1. Die Einstellhebel 20 sind möglichst dicht an der hinteren Vorratsbehälterwand 24 liegend angeordnet. Desweiteren sind die Einstellhebel 20, Anschläge 31 und Skalen 25 zumindest 40-50 cm oberhalb der Streuorgane 10 angeordnet. Somit befinden sich die Einstellhebel 20, Skalen 25 und Anschläge 31 außerhalb des Bereiches, in dem sich während des Betriebes Düngerstaub ablagert. Die Skalen 25 reichen etwa bis an das obere Ende des trichterförmigen Bereiches des Vorratsbehälters 1. Die Anschläge 31 und Skalen 25 sind in einer aufrechten Ebene am Vorratsbehälter, befestigt.

Das Getriebe 60 des Schleuderdüngerstreuers weist eine Umstelleinrichtung 61 auf, mittels welcher die Drehrichtung der Schleuderscheiben 9 umkehrbar ist. Zum Normalstreuen werden die Schleuderscheiben 9 mit den Wurfschaufeln 10 und 11 in der einen Drehrichtung angetrieben, in welcher die Düngerpartikel derart abgeschleudert werden, daß das Streubild jeweils im seitlichen Bereich flachabfallende Streuflanken aufweisen. Zum Grenzstreuen wird über die Umschalteinrichtung 61 die Drehrichtung der Schleuderscheiben 9 umgekehrt, so daß der Dünger auf der der Feldrand zugewandten Seite mit einer geringeren Wurfweite im äußeren Bereich abgeschleudert wird, so daß ein steilabfallendes Streubild im Grenzbereich erzielt wird. Es ist auch möglich, die Umschalteinrichtung 61 und die zugehörige Getriebeausbildung so vorzusehen, daß nur die der Grenze benachbart liegende Schleuderscheibe 9 in ihrer Drehrichtung umgekehrt wird, um auf der der Grenze benachbarten Seite ein Streubild mit einer steilabfallenden Streuflanke zu erzielen, so daß kein oder nur wenig Dünger über die Grenze hinausgeworfen wird. Die Umschalteinrichtung 61 für die Grenzstreueinrichtung kann als Bowdenzug, Zugseil oder Hydraulikzylinder etc. ausgebildet sein. Die nur schematisch dargestellte Umschalteinrichtung 61 ist mit dem Übertragungselement 45 in weiter unten beschriebener Weise verbunden.
Der Einstelleinrichtung 27 bis 31 der Dosierorgane 16 ist eine zusätzliche Einstelleinrichtung 44 zur Ausbringmengeneinstellung für das Dosierorgan 16 welches das Material, der dem Grenzstreuschirm zugeordneten Schleuderscheibe zudosiert, vorgesehen. Mittels dieser Einstelleinrichtung 41 ist zusätzlich zu den eingangs beschriebenen Anschlag- und Einstellelementen 27 bis 31 die Einstellung einer zweiten Ausbringeinstellung möglich. Zwischen der Umschalteinrichtung 61 für die Grenzstreueinrichtung bzw. dem Betätigungselement der Grenzstreueinrichtung und der zusätzlichen Einstelleinrichtung 44 ist das als Seil ausgebildete mechanische Übertragungselement 45 angeordnet. Dieses Übertragungselement 45 kann auch hydraulisch oder pneumatisch ausgebildet sein.

An den Hebel 20 ist das über dem Bolzen 22 hinausragende Verlängerungsstück 46 mit dem kurvenförmigen Element 47, vorzugsweise anschraubbar und/oder ansteckbar angeordnet. Dieses Element 47 weist das bogenförmige Landloch auf, in welchem der einstellbare Anschlag 49 zur Festlegung der für das Grenzstreuen vorgesehen Ausbringmenge angeordnet ist. Dieses Anschlagelement 49 wird so eingestellt, daß sich eine gleichmäßige Düngerverteilung in etwa gleicher Größenordnung wie im übrigen Feld ergibt. Auf dem kurvenförmigen Element 47 ist im Bereich des Langloches 48 die Skala 50 zur Einstellung des Anschlagelementes 47 angeordnet.

An dem Rahmen 2 bzw. dem Vorratsbehälter 1 ist der als Anschlag ausgebildete verschiebbare Anschlagbolzen 51, der Teil der Einstellvorrichtung 44 ist, angeordnet. Der Anschlagbolzen 51 wird mittels der Feder 52 in Pfeilrichtung 53 gedrückt, wenn durch das an ihm befestigte Übertragungselement 45, eine Einschaltung der Einstelleinrichtung 44 durch das Umschalten durch die Grenzstreueinrichtung des Düngerstreuers zum Grenzstreuen erfolgt.

Die Funktionsweise der Maschine beim Grenzstreuen ist folgende:

Zu Beginn einer Streubahn sind die Dosierorgane 16 geschlossen, so daß sich der Hebel 20 in der Position 20' befindet. Zu Beginn der Streubahn, die an der Grenze liegt, wird mittels eines Betätigungselementes die Grenzstreueinrichtung durch die Umschalteinrichtung 61 eingeschaltet, so daß die Drehrichtung der Schleuderscheiben umgekehrt wird. Hierdurch wird über das Übertragungselement 45 der Anschlagbolzen 51 durch die Feder 52 in Pfeilrichtung 53 gedrückt werden, so daß das vordere Ende 54 des Anschlagelementes 51 sich in dem Bewegungsbereich des einstellbaren Anschlagelementes 49 befindet. Wenn nun zu Beginn der Grenzstreubahn die Dosierelemente 16 geöffnet werden, d. h., daß die Federn 32 die jeweiligen Hebel 20 in die in Fig. 2 gezeigte obere Position zu ziehen versuchen, so verhindert das Anschlagelement 49 in Verbindung mit dem Anschlagbolzen 51, daß der Hebel 20 der Grenze zugeordnet ist, ganz nach oben gegen das Anschlagelement 31 gezogen werden kann. Somit ist eine reduzierte Ausbringmenge für das Dosierorgan, welches der Schleuderscheibe, die dem Grenzstreuschirm 40 und der Grenze benachbart ist, eingestellt.

Wenn das Grenzstreuen beendet ist, wird über das Betätigungsmittel die Grenzstreueinrichtung über die Umschalteinrichtung 61 ausgeschaltet und gleichzeitig wird über das mechanische Übertragungsmittel 45 der Anschlagbolzen 51 in die in den Fig. 1 und 2 eingezeichnete Position gezogen, so daß der Hebel 20 in die in Fig. 2 eingezeichnete Position mittels der Feder 32 gegen das Anschlagelement 31 gezogen wird.

Somit wird also automatisch beim Umschalten auf die Einstellung "Grenzstreuen" durch die Umschalteinrichtung 61 eine reduzierte Menge für die Grenzstreuseite eingestellt.

## Patentansprüche

1. Zentrifugaldüngerstreuer mit einem Vorratsbehälter, zumindest zwei um aufrechte Achsen rotierend angetriebenen und mit Wurfschaufeln besetzten Schleuderscheiben, denen das sich im Vorratsbehälter befindliche Düngermaterial über einstellbare Dosierorgane zugeführt wird und mit außerhalb der Rotationsbahn der äußeren Enden der Wurfschaufeln angeordneten und Leitelemente aufweisenden Grenzstreueinrichtung zur Erzeugung eines Streubildes mit einer zur Grenze steil abfallenden Streustärke und zur Begrenzung der Wurfweite der Düngerpartikel bis zur Grenze, **dadurch gekennzeichnet, daß** eine erste Ausbringstellung bei zumindest einem der Dosierorgane (16), welches der dem Grenzstreuschirm (40) zugeordneten Schleuderscheibe zugeordnet ist, mittels einstellbarer Anschlagelemente (27, 28, 29, 30, 31) festlegbar ist, daß eine zweite Ausbringstellung mittels einstellbarer Einstellelemente (49, 51, 55, 59) beim Grenzstreuen mit dem Grenzstreuschirm (40) einstellbar ist, und daß ein mechanisch, hydraulisch und/oder pneumatisches Übertragungselement (45) zwischen dem Grenzstreuschirm (40) und/oder dem Betätigungselement (43) des Grenzstreuschirmes (40) einerseits und dem Einstellelement (49, 51, 55, 59) und/oder dem Bedienungselement des Einstellelementes (49, 51, 55, 59) anderseits angeordnet ist.

2. Zentrifugaldüngerstreuer nach Anspruch 1, **dadurch gekennzeichnet, daß** mittels des Übertragungselementes (45) die Anschlagelemente (49, 51, 55, 59) des Dosierorgans (16) für eine reduzierte Ausbringmengenstellung in der Betriebsstellung (40') des Grenzstreuschirmes ( 40 ) in Wirkstellung bringbar ist.

3. Zentrifugaldüngerstreuer nach einem oder mehreren der vorstehenden Ansprüche, **dadurch gekennzeichnet, daß** den Betätigungs- und/oder Übertragungsgliedern (18) der Dosierorgane (16) das Einstellelement (49, 51) für die zweite Öffnungsstellung zugeordnet ist.

4. Zentrifugaldüngerstreuer nach Anspruch 1, **dadurch gekennzeichnet, daß** zwischen dem Betätigungs- und/oder Übertragungsgliedern (20) der Dosierorgane und dem Qrenzstreuschirm (40) eine Kopplungseinrichtung (57, 59) angeordnet ist.

5. Zentrifugaldüngerstreuer nach einem oder mehreren der vorstehenden Ansprüche, **dadurch gekennzeichnet, daß** zur Einstellung der zweiten Öffnungsstellung des Dosierorgans eine Skala (50) mit einem einstellbaren Anschlagelement (49, 59) vorgesehen ist.

6. Zentrifugaldüngerstreuer nach Anspruch 1, **dadurch gekennzeichnet, daß** dem einstellbaren Anschlagelement ein Exenterelement zugeordnet ist, daß das Exenterelement mittels eines Hebels um seine Schwenkachse verdrehbar ist, und daß der Hebel mit dem Qrenzstreuschirm und/oder dem Betätigungselement des Grenzstreuschirms verbunden ist.

## Claims

1. Centrifugal fertiliser spreader, having a hopper, at least two centrifugal discs which are driven so as rotate about upwardly extending axes and are fitted with throwing vanes, the fertiliser material, situated in the hopper, being supplied to said discs via adjustable metering members, and said spreader having a limited spreading apparatus, which is disposed externally of the path of rotation of the outer ends of the throwing vanes and has guiding members, to produce a spreading pattern with a spreading intensity, which drops steeply towards the boundary, and to limit the throwing range for the fertiliser particles as far as the boundary, **characterised in that** a first distribution position can be established by means of adjustable stop members (27, 28, 29, 30, 31), when there is at least one of the metering members (16) associated with the centrifugal disc associated with the limited spreading screen (40), **in that** a second distribution position can be set by means of adjustable adjusting members (49, 51, 55, 59) for the limited spreading operation with the limited spreading screen (40), and **in that** a mechanical, hydraulic and/or pneumatic transmitting element (45) is disposed between the limited spreading screen (40) and/or the actuating element (43) of the limited spreading screen (40), on the one hand, and the adjusting member (49, 51, 55, 59) and/or the operating element of the adjusting member (49, 51, 55, 59), on the other hand.

2. Centrifugal fertiliser spreader according to claim 1, **characterised in that** the stop members (27, 28, 29, 30, 31) of the metering member (16) can be brought into their operative position by means of the transmitting element (45) for a reduced output quantity position in the operative position (40') of the limited spreading screen (40).

3. Centrifugal fertiliser spreader according to one or more of the preceding claims, **characterised in that** the adjusting member (49, 51) for the second open position is associated with the actuating and/or transmitting members (18) of the metering members (16).

4. Centrifugal fertiliser spreader according to claim 1, **characterised in that** a coupling apparatus (57, 59) is disposed between the actuating and/or transmitting members (18) of the metering members and the limited spreading screen (40).

5. Centrifugal fertiliser spreader according to one or more of the preceding claims, **characterised in that** a scale (50) is provided with an adjustable stop member (49, 59) in order to set the second open position of the metering member.

6. Centrifugal fertiliser spreader according to claim 1, **characterised in that** an eccentric element is associated with the adjustable stop member, **in that** the eccentric element is rotatable about its pivotal axis by means of a lever, and **in that** the lever is connected to the limited spreading screen and/or the actuating element of the limited spreading screen.

## Revendications

1. Epandeur centrifuge d'engrais comportant un réservoir d'alimentation et au moins deux disques d'épandage tournant autour d'axes montants, entraînés et comportant des palettes d'éjection, ces disques d'épandage étant alimentés par l'intermédiaire d'organes de dosage réglables avec de l'engrais contenu dans le réservoir, et avec en dehors de la trajectoire de relation des extrémités extérieures des palettes d'éjection, une installation d'épandage en bordure comportant des éléments de guidage, pour créer une image d'épandage avec une intensité d'épandage diminuant fortement au niveau de la bordure, ainsi que pour limiter la portée d'éjection des particules d'engrais jusqu'à la bordure,
**caractérisé par**
une première position de distribution pour au moins un organe de dosage (16) associé au disque d'épandage de l'écran d'épandage en bordure (40), se fixant avec des éléments de butée réglable (27, 28, 29, 30, 31),
une seconde position de distribution réglable à l'aide d'éléments de réglage (49, 51, 55, 59) pour l'épandage en bordure avec l'écran d'épandage en bordure (40), et
un élément de transmission (45) mécanique, hydraulique et/ou pneumatique, installé entre, d'épandage en bordure (40) et/ou l'élément d'actionnement (43) de l'écran d'épandage en bordure (40) d'une part et l'élément de réglage (49, 51, 55, 59) et/ou l'élément de manoeuvre de l'élément de réglage (49, 51, 55, 59) d'autre part.

2. Epandeur centrifuge d'engrais selon la revendication 1,
**caractérisé en ce que**
l'élément de transmission (45) met les éléments de butée (49, 51, 55, 59) de l'organe de dosage (16) en position active pour régler une quantité réduite à distribuer, en position de fonctionnement (40') de l'écran d'épandage en bordure (40).

3. Epandeur centrifuge d'engrais selon l'une ou plusieurs des revendications précédentes,
**caractérisé en ce que**
l'élément de réglage (49, 51) de la seconde position d'ouverture est associé aux organes d'actionnement et/ou de transmission (18) des organes de dosage (16).

4. Epandeur centrifuge d'engrais selon la revendication 1,
**caractérisé par**
une installation de couplage (57, 59) entre les organes d'actionnement et/ou de transmission (20) des organes de dosage et l'écran d'épandage en bordure (40).

5. Epandeur centrifuge d'engrais selon l'une ou plusieurs des revendications précédentes,
**caractérisé par**
une échelle graduée (50) avec un élément de butée réglable (49, 59) prévu pour régler la seconde position d'ouverture de l'organe de dosage.

6. Epandeur centrifuge d'engrais selon la revendication 1,
**caractérisé en ce qu'**
un élément excentrique est associé à l'élément de butée réglable, cet élément excentrique peut être tourné autour d'un axe de pivotement par un levier, et
le levier est relié à l'écran d'épandage en bordure et/ou l'élément d'actionnement de l'écran d'épandage en bordure.
